# EUROPÄISCHE PATENTSCHRIFT

(11) **EP 2 374 611 B1**
(45) Veröffentlichungstag und Bekanntmachung des Hinweises auf die Patenterteilung: **16.09.2015**
(21) Anmeldenummer: 11161578.7
(22) Anmeldetag: 07.04.2011
(51) Int. Cl.: B32B 5/18, B32B 5/28, B32B 27/18, B32B 27/32, E04G 9/05

(54) **Betonschaltafel**
Concrete formwork panel
Panneau de coffrage de béton

(30) Priorität: 09.04.2010 CH 5192010
(43) Veröffentlichungstag der Anmeldung: 12.10.2011
(73) Patentinhaber: Quadrant Plastic Composites AG, 5600 Lenzburg (CH)
(72) Erfinder: Baser, Burak, 4663 Aarburg (CH); Bandemir, Philipp, 5614 Sarmenstorf (CH)
(74) Vertreter: Schmauder & Partner AG Patent- & Markenanwälte VSP

(56) Entgegenhaltungen:
- WO-A1-2006/105682
- WO-A1-2006/133586
- WO-A1-2009/027548
- WO-A2-02/18212
- US-A1- 2006 275 600
- WIND H: "BEKISTINGSPLAAT IN KUNSTSTOF", BOUWWERELD, REED BUSINESS INFORMATION, DOETINCHEM, NL, Nr. 4, 12. Februar 2001 (2001-02-12), Seite 22/23, XP001058561, ISSN: 0026-5942
- R. Schweizer: "Kunststoff-Schalhaut", MEVA Schalungs-Systeme GmbH Schalungsdruck, Sonderausgabe "alkus-Platten", September 2002 (2002-09), XP002643861, 72221 Haiterbach (DE) Gefunden im Internet: URL:http://www.meva.de/global/download/de/ prospekte/schalungsdrucke/2002_06_sd-spezi al-alkus.pdf [gefunden am 2011-06-21]
- "Brochure "Macomass"", ,
- Janssen, L.P.B.M. & Warmoeskerken, M.M.C.G.: "Fysisch technologisch bij-de-handboek", 1982, Vereniging voor Studie- en Studentenbelangen Delft, Delft (NL) ISBN: 90-6562-020-6 page 112,

## Beschreibung

Die Erfindung betrifft eine Betonschaltafel aus Leichtkunststoff mit einer Kernschicht aus Luftporen enthaltendem, vorzugsweise glasfaserverstärktem Polypropylen einer Dichte von weniger als 1.0 g/cm³ und einer Dicke von 3 bis 30 mm, und mindestens einer Deckschicht aus kompaktem, vorzugsweise glasfaserverstärktem Polypropylen mit einer Dicke von 0.5 bis 3 mm, sowie deren Verwendung zur Herstellung von Betonbauteilen mit verbesserter Oberfläche.

Herkömmliche Betonschaltafeln, bei denen in einem Metallrahmen die Schalbretter fixiert sind, bestehen normalerweise aus Sperrholz. Schaltafeln können je nach Anwendung 0.1 bis 4.0 m breit und 0.5 bis 6.0 m lang sein. Allerdings werden derartige Elemente zunehmend auch aus Kunststoff hergestellt. So beschreibt die US 2006/275600 verschiedene Betongussformen aus einer Vielzahl von Polymeren, welche jeweils einen oder mehrere Füllstoffe enthalten. Die Füllstoffe werden dabei mit erheblichen Mengenanteilen von 5 bis 60, insbesondere von 25 bis 45 Gew.% eingesetzt.

Neuerdings werden Schaltafeln in zunehmendem Masse aus Leichtkunststoff hergestellt. Beispielsweise ist in der WO 2006/133586 A eine biegesteife Verbundplatte mit Deckschichten aus kompaktem, vorzugsweise glasfaserverstärktem Polypropylen und einer Kernschicht aus Luftporen enthaltendem, glasfaserverstärktem Polypropylen beschrieben, die für Schaltafeln verwendet werden kann. Auch die WO 2007/093158 beschreibt eine Betonschalplatte mit einem Kern aus geschäumten Polypropylen, Zwischenschichten aus Aluminiumfolien und Aussenschichten aus ungeschäumtem Polypropylen.

In der Praxis hat es sich aber gezeigt, dass Schaltafeln nach WO 2006/133586 A mit einigen Nachteilen behaftet sind. Beispielsweise weisen damit hergestellte Bauteile aus Sichtbeton oft eine ungleichmässige Oberfläche auf, und es müssen grössere Mengen an Schalölen, z.B. Mineralöle, zum besseren Trennen der Schaltafel von der Betonoberfläche verwendet werden. Schaltafeln nach WO 2007/093158 benötigen darüber hinaus eine Aluminium-Zwischenschicht, was das Recyclieren erschwert.

Der Erfindung lag nun die Aufgabe zugrunde, Betonschaltafeln aus Leichtkunststoff bereitzustellen, die solche Nachteile nicht aufweisen.

Diese Aufgabe wird erfindungsgemäss gelöst durch eine Betonschaltafel mit einer 3 bis 30 mm dicken, Luftporen enthaltenden Kernschicht mit einer Dichte von weniger als 1.0 g/cm³ aus Polypropylen, und mindestens einer 0.5 bis 3 mm dicken, luftporenfreien Deckschicht aus Polypropylen, wobei das Polypropylen der Deckschicht folgende Zusatzstoffe enthält:
- 1 bis 5 Gew.-% Talkum, und
- 1 bis 10 Gew.-% eines langkettigen Silikons dere Formel (CH₃)₃-Si-O-((CH₃)₂-Si-O)ₙ-Si(CH₃)₃ und einer Viskosität von 1 bis 1'000'000 mPa·s oder von 1 bis 10% Polytetrafluorethylen-Partikeln.

Für manche Anwendungen ist die erfindungsgemässe Betonschaltafel mit sandwichartig mit zwei Deckschichten ausgestattet. Alternativ kann jedoch auch nur eine Deckschicht vorgesehen sein, was insbesondere eine kostengünstigere Lösung ergibt. Es versteht sich, dass bei der einseitigen Ausgestaltung die Betonschaltafel so auszurichten ist, dass die erfindungsgemässe Deckschicht auf der dem Beton ausgesetzten Seite der Schaltafel liegt.

Der sprachlichen Einfachheit halber wird nachfolgend die Formulierung "Deckschicht" verwendet, welche jedoch auch die für beidseitige Ausführungsformen zutreffende Mehrzahl umfasst.

Zusätzlich kann das Polypropylen der Deckschicht noch 0.1 bis 5 Gew.-% eines Antistatikums enthalten.

Als Luftporen enthaltende Kernschicht ist glasfaserverstärktes Polypropylen mit einem Glasgehalt von 30 bis 80 Gew.-% und einem Gehalt an Luftporen von 20 bis 80, vorzugsweise 30 bis 70 Vol.-%, bevorzugt. Dieses kann z.B. nach einem in der WO2006/105682 beschriebenen Verfahren hergestellt werden durch Vermischen von Polypropylenfasern und Glasfasern, Vernadeln des Mischvlieses, Erwärmen auf Temperaturen oberhalb des Erweichungspunktes des Polypropylens und Verpressen, zum Beispiel in einer Doppelbandpresse bei relativ niedrigen Drücken. Bei einem anderen Verfahren wird Polypropylenpulver mit kurzen Verstärkungsfasern in wässriger Suspension nach dem Papierherstellungsverfahren vermischt, das Wasser wird abgepresst, und die erhaltene Platte wird getrocknet und heiss verpresst.

Luftporenhaltige Verbundplatten sind bekannt und als Bahnen oder Platten mit einer Breite von bis zu 2.3 m im Handel erhältlich, z.B. SymaLITE der Quadrant Plastic Composites AG, SEEBERLITE der Röchling Automotive AG, ACOUSTI-MAX der Owens Corning Corp., SUPERLITE von HanWha und KARAMTEC der Karam Tech Corporation. Die Kernschicht ist 3 bis 30 mm, vorzugsweise 5 bis 15 mm dick, und hat eine Dichte von weniger als 1.0 g/cm³, vorzugsweise von 0.3 bis 0.6 g/cm³. Grundsätzlich kann die Kernschicht auch glasfaserfreies, expandiertes Polypropylen sein, das z.B. durch Schaumextrusion von Treibmittel enthaltendem Polypropylen oder durch Versintern von Polypropylen-Schaumpartikeln hergestellt werden kann.

Die Deckschicht besteht aus Polypropylen, das vorzugsweise mit Glasfasern verstärkt ist. Dies können z.B. vernadelte Wirrglasfasern sein, was die so genannten GMT-Platten ergibt, oder vernadelte unidirektionale Endlosfasern, sowie Kombinationen, bei denen Wirrglasfasern mit unidirektionalen Endlosfasern zusammengenadelt sind. Besonders bevorzugt als Verstärkungsfasern ist die Kombination eines Glasfasergewebes oder -geleges welche mit Schnittglasfasern oder mit einer Glasfasermatte vernadelt sind (z.B. STex der Quadrant Plastic Composites AG). Die Deckschicht enthält im allgemeinen 20 bis 60, vorzugsweise zugsweise 25 bis 50 Gew.-% Glasfasern. Sie sind 0.5 bis 3 mm, vorzugsweise 1.0 bis 2.0 mm dick. Grundsätzlich kann die Deckschicht auch aus glas-faser-freiem Polypropylen bestehen oder aus mit Polypropylen- oder Polyethylenfolien beschichteten Sperrholzplatten.

Das Polypropylen der Deckschicht enthält erfindungsgemäss 1 bis 5 Gew.-%, insbesondere 1 bis weniger als 5 Gew.-%, vorzugsweise 2 bis 4 Gew.-% Talkum; vorzugsweise Micro-Talkum mit einer medianen Partikelgrösse von 1 bis 100 µm. Es wurde überraschend gefunden, dass bereits derart geringe Mengen an zugesetztem Talkum die Bereitstellung von Schaltafeln mit guter Entformbarkeit ermöglichen. Insbesondere die Verwendung von sehr feinkörnigem Micro-Talkum scheint eine gleichmässigere und höhere Kristallisation des Polypropylens zu bewirken, wodurch dieses widerstandsfähiger gegen Rauhigkeit wird. Im Ergebnis führt dies zu einer besseren Entformbarkeit der Schaltafeln.

Weitere erfindungsgemässe Zusatzstoffe sind langkettige Silikone in Mengen von 1 bis 10 Gew.-%, vorzugsweise von 2 bis 5 Gew.-%. Bevorzugt sind flüssige Silikone mit der chemischen Formel (CH₃)₃-Si-O-((CH₃)₂-Si-O)ₙ-Si(CH₃)₃ mit einem Molekulargewicht von bis zu 150'000 g/mol. Die Silikone weisen eine Viskosität von ungefähr 1 bis 1'000'000 mPa·s, vorzugsweise 1'000 bis 100'000 mPa·s, auf. Geeignete Zusatzstoffe sind auch Polytetrafluorethylen-Partikel, vorzugsweise mit einer Teilchengrösse von 1 bis 100 µm, in Mengen von 1 bis 10, insbesondere von 2 bis 5 Gew.-%. Vorzugsweise enthält das Polypropylen der Deckschicht zusätzlich noch ein Antistatikum in Mengen von 0.1 bis 5 Gew.-%, insbesondere von 0.2 bis 2 Gew.-%. Geeignete Antistatika sind z.B. Glycerinmonostearat, Alkylamine, Metallpulver und leitfähiger Russ. Die Zusatzstoffe werden in das Polypropylen vorzugsweise bei der Herstellung der Deckschicht homogen eingemischt.

Die erfindungsgemässen Schaltafeln werden bei der Herstellung von Betonbauteilen verwendet. Dabei ist von Vortell, dass wesentlich weniger Schalöle zum Trennen der Schaltafeln vom Betonbauteil als bei Schaltafeln ohne die erfindungsgemässen Zusätze verwendet werden müssen, in Ausnahmefällen kommt man ganz ohne Schalöle aus. Ein weiterer Vorteil ist, dass an den erfindungsgemässen Schaltafeln der flüssige Beton beim Eingiessen besser gleitet, so dass er nach dem Aushärten eine homogenere Oberfläche aufweist. Ausserdem werden Rauhigkeiten und Einfallstellen vermieden. Schliesslich wird der Staubbefall vermindert, welcher in der Regel Verfärbungen auf der Betonoberfläche verursacht.

Grundsätzlich ist es aber auch möglich, auf die Deckschicht eine Polypropylenfolie aufzulaminieren, welch die erfindungsgemässen Zusatzstoffe eingemischt enthält.

## Patentansprüche

1. Betonschaltafel, umfassend
- eine 3 bis 30 mm dicke, Luftporen enthaltende Kernschicht mit einer Dichte von weniger als 1.0 g/cm³ aus Polypropylen, und
- mindestens eine 0.5 bis 3 mm dicke, luftporenfreie Deckschicht aus Polypropylen,
**dadurch gekennzeichnet, dass** das Polypropylen der Deckschicht folgende Zusatzstoffe enthält:
- 1 bis weniger als 5 Gew.-% Talkum, und
- 1 bis 10 Gew.% eines langkettigen Silikons der Formel (CH₃)₃-Si-O-((CH₃)₂-Si-O)ₙ-(CH₃)₃ und einer Viskosität von 1 bis 1'000'000 mPa·s
oder 1 bis 10 Gew.-% Polytetrafluorethylen-Partikel.

2. Schaltafel nach Anspruch 1, **dadurch gekennzeichnet, dass** der Gehalt an Talkum im Polypropylen der Deckschicht 2 bis 4 Gew.-% beträgt.

3. Schaltafel nach Anspruch 1 oder 2, **dadurch gekennzeichnet, dass** das Talkum eine mediane Partikelgrösse von 1 bis 100 µm aufweist.

4. Schaltafel nach einem der Ansprüche 1 bis 3, **dadurch gekennzeichnet, dass** das Polypropylen der Deckschicht als weiteren Zusatzstoff 0.1 bis 5 Gew.-% eines Antistatikums enthält.

5. Schaltafel nach einem der Ansprüche 1 bis 4, **dadurch gekennzeichnet, dass** die Kernschicht und die Deckschicht aus glasfaserverstärktem Polypropylen gebildet sind.

6. Schaltafel nach Anspruch 5, **dadurch gekennzeichnet, dass** die Deckschicht als Glasfaserverstärkung ein Glasfasergewebe oder -gelege enthält, welches gegebenenfalls mit Schnittglasfasern oder mit einer Glasfasermatte vemadelt ist, wobei die Schnittglasfasem bzw. die Glasfasermatte an der Aussenseite der Deckschicht angeordnet sind.

7. Schaltafel nach einem der Ansprüche 1 bis 6, **dadurch gekennzeichnet, dass** die Zusatzstoffe in das Polypropylen der Deckschicht homogen eingemischt sind.

8. Schaltafel nach Anspruch 4, **dadurch gekennzeichnet, dass** das Antistatikum ausgewählt ist aus der aus Glycerinmonostearat, Alkylaminen, Metallpulver und leitfählgem Russ gebildeten Gruppe.

9. Verwendung von Schaltafeln nach einem der Ansprüche 1 bis 8 zum Herstellen von Betonbauteilen mit verbesserter Oberfläche.

## Claims

1. A concrete formwork panel, comprising
- a propylene core layer containing air voids and having a thickness of 3 to 30 mm and a density of less than 1.0 g/cm³, and
- at least one polypropylene cover layer free from air voids and having a thickness of 0.5 to 3 mm,
**characterized in that** the polypropylene of the cover layer contains the following additives:
- 1 to less than 5 wt.-% talcum, and
- 1 to 10 wt.-% of a long-chain silicone with the formula (CH₃)₃-Si-O-((CH₃)₂-Si-O)ₙ-Si(CH₃)₃ and a viscosity of 1 to 1'000'000 mPa·s or 1 to 10 wt.-% polytetrafluoroethylene particles.

2. The formwork panel according to claim 1, **characterized in that** the content of talcum in the polypropylene of the cover layer is 2 to 4 wt.-%.

3. The formwork panel according to claim 1 or 2, **characterized in that** the talcum has a median particle size of 1 to 100 µm.

4. The formwork panel according to one of claims 1 to 3, **characterized in that** the polypropylene of the cover layer contains 0.1 to 5 wt.-% of an antistatic as a further additive.

5. The formwork panel according to one of claims 1 to 4, **characterized in that** the core layer and the cover layer are made from glass fiber reinforced polypropylene.

6. The formwork panel according to claim 5, **characterized in that** the cover layer contains, as glass fiber reinforcement, a glass fiber woven or an oriented glass fiber layer which is optionally needled with chopped glass fibers or with a glass fiber mat, the chopped glass fibers and the glass fiber mat being arranged at the outer side of the cover layer.

7. The formwork panel according to one of claims 1 to 6, **characterized in that** the additives are homogeneously blended into the polypropylene of the cover layer.

8. The formwork panel according to claim 4, **characterized in that** the antistatic is selected from the group consisting of glycerin monostearate, alkylamines, metal powders and conductive carbon black.

9. Use of the formwork panel according to one of claims 1 to 8 for manufacturing concrete construction parts with an improved surface.

## Revendications

1. Panneau de coffrage de béton comprenant :
- une couche de noyau en polypropylène renfermant des pores perméables à l'air ayant une épaisseur de 3 à 30 mm et une densité inférieure à 1,0 g / cm³, et
- au moins une couche de recouvrement en polypropylène exempte de pores perméables à l'air et ayant une épaisseur de 0,5 à 3 mm,
**caractérisé en ce que**
le polypropylène de la couche de recouvrement renferme les additifs suivants :
- 1 à moins de 5% en poids de talc, et
- 1 à 10 % en poids d'un silicone à longue chaîne de formule (CH₃)₃-Si-O-((CH₃)₂-Si-O)ₙ-Si(CH₃)₃ et ayant une viscosité de 1 à 1.000.000 mPa s,
ou 1 à 10 % en poids de particules de polytétrafluor éthylène.

2. Panneau de coffrage conforme à la revendication 1,
**caractérisé en ce que**
la teneur en talc du polypropylène de la couche de recouvrement est de 2 à 4 % en poids.

3. Panneau de coffrage conforme à la revendication 1 ou 2,
**caractérisé en ce que**
le talc présente une granulométrie moyenne de 1 à 100 µm.

4. Panneau de coffrage conforme à l'une des revendications 1 à 3,
**caractérisé en ce que**
le polypropylène de la couche de recouvrement renferme en tant qu'additif supplémentaire 0,1 à 5 % en poids d'un agent antistatique.

5. Panneau de coffrage conforme à l'une des revendications 1 à 4,
**caractérisé en ce que**
la couche de noyau et la couche de recouvrement sont réalisées en polypropylène renforcé par des fibres de verre.

6. Panneau de coffrage conforme à la revendication 5,
**caractérisé en ce que**
la couche de recouvrement renferme en tant que moyen de renforcement par des fibres de verre un tissu ou une nappe de fibres de verre qui est le cas échéant aiguilleté avec des fibres de verre de coupe ou une natte de fibres de verre, les fibres de verre de coupe ou la natte de fibres de verre étant située(s) sur la face externe de la couche de recouvrement.

7. Panneau de coffrage conforme à l'une des revendications 1 à 6,
**caractérisé en ce que**
les additifs sont mélangés de façon homogène dans le polypropylène de la couche de recouvrement.

8. Panneau de coffrage conforme à la revendication 4,
**caractérisé en ce que**
l'agent antistatique est choisi dans le groupe formé par les agents antistatiques suivants : monostérate de glycérine, alkyl amines, poudre métallique et noir de carbone conducteur.

9. Utilisation de panneaux de coffrage conforme à l'une des revendications 1 à 8, pour l'obtention d'éléments en béton ayant une surface améliorée.
